(19) Europäisches Patentamt / European Patent Office / Office européen des brevets

(11) **EP 3 513 230 B1**

(12) **FASCICULE DE BREVET EUROPEEN**

(45) Date de publication et mention
de la délivrance du brevet:
**24.06.2020 Bulletin 2020/26**

(21) Numéro de dépôt: **17780472.1**

(22) Date de dépôt: **12.09.2017**

(51) Int Cl.:
*G02B 6/34* *(2006.01)*  *G02B 6/30* *(2006.01)*
*G02B 6/124* *(2006.01)*

(86) Numéro de dépôt international:
**PCT/FR2017/052412**

(87) Numéro de publication internationale:
**WO 2018/051001 (22.03.2018 Gazette 2018/12)**

(54) **DISPOSITIF DE COUPLAGE OPTIQUE**

OPTISCHE KUPPLUNGSVORRICHTUNG

OPTICAL COUPLING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.09.2016 FR 1658627**

(43) Date de publication de la demande:
**24.07.2019 Bulletin 2019/30**

(73) Titulaire: **Commissariat à l'énergie atomique
et aux énergies alternatives
75015 Paris (FR)**

(72) Inventeurs:
• **HASSAN, Karim
  89470 Moneteau (FR)**
• **BOUTAMI, Salim
  38100 Grenoble (FR)**

(74) Mandataire: **Brevalex
95, rue d'Amsterdam
75378 Paris Cedex 8 (FR)**

(56) Documents cités:
**EP-A1- 2 977 801      US-A- 5 317 551
US-A1- 2009 087 141      US-B1- 7 184 627**

• **HIRATA T ET AL: "Demonstration of a waveguide
lens monolithically integrated with a laser diode
by compositional disordering of a quantum well",
IEEE PHOTONICS TECHNOLOGY LETTERS,
IEEE SERVICE CENTER, PISCATAWAY, NJ, US,
vol. 5, no. 6, 1 juin 1993 (1993-06-01), pages
698-700, XP011410897, ISSN: 1041-1135, DOI:
10.1109/68.219715**

## Description

## DOMAINE TECHNIQUE

La présente invention concerne un dispositif de couplage optique comprenant une lentille de focalisation et un réseau de couplage optique destiné à coupler optiquement des dispositifs optiques, par exemple, des dispositifs photoniques. Plus particulièrement, la présente invention concerne un dispositif de couplage optique comprenant un réseau de couplage par diffraction destiné à conférer à un rayonnement lumineux, émis par ledit réseau, une enveloppe Gaussienne.

## ART ANTÉRIEUR

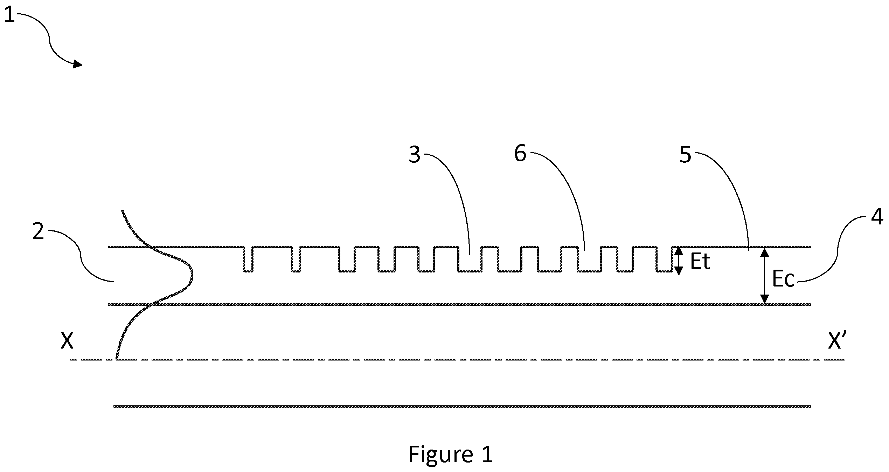

La figure 1 présente un dispositif de couplage optique 1, comprenant un guide d'onde 2 et un réseau de couplage optique 3, connu de l'état de la technique et décrit à la figure 1 du document [1] cité à la fin de la description. Le dispositif de couplage optique 1 comprend :

- un guide d'onde 2 comprenant un cœur formé dans une couche cœur 4 d'une épaisseur Ec, la couche cœur 4 comprenant une face, dite face avant 5, le guide d'onde étant destiné à guider un rayonnement d'une longueur d'onde $\lambda$, et selon une direction XX' parallèle à la face avant ;
- un réseau de couplage 3 comprenant une pluralité de tranchées 6 formées sur la face avant 5, d'une profondeur Et inférieure à l'épaisseur Ec, et disposées périodiquement selon la direction XX'.

Ce type de dispositif est généralement utilisé pour coupler optiquement le guide d'onde avec un autre dispositif optique tel qu'une fibre optique.

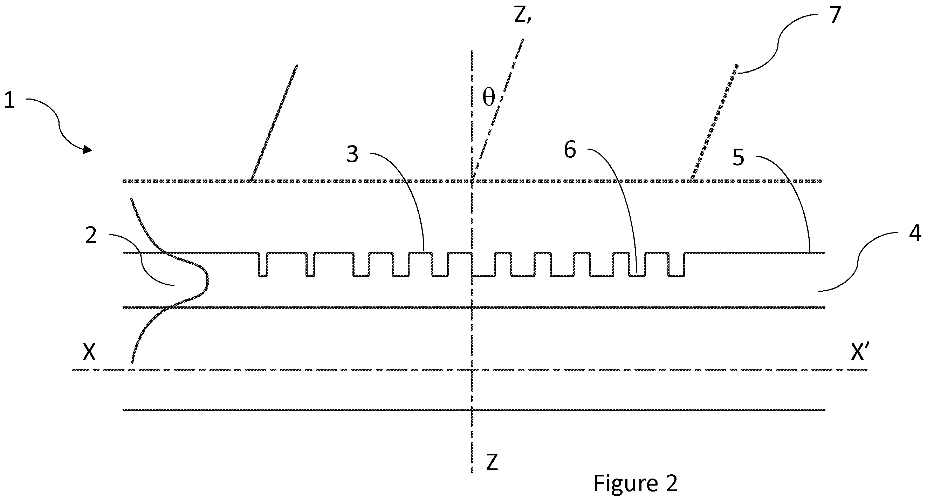

La figure 2 illustre un exemple de couplage d'une fibre optique 7 avec le guide d'onde 2 du dispositif optique. La fibre optique 7 est disposée parallèlement à un plan H perpendiculaire à la face avant 5, et comprenant la direction XX'. La fibre optique 7 présente également un angle $\theta$ par rapport à la direction normale ZZ' au réseau de couplage optique 3. L'angle $\theta$ correspond également à un angle d'émission du réseau de couplage optique 3. Plus particulièrement, l'extrémité de la fibre optique est disposée au-dessus du réseau de couplage 3, de sorte qu'un rayonnement lumineux provenant du guide d'onde 2 soit, au moins en partie, injecté dans la fibre optique 7 via le réseau de couplage optique.

Nous observons, cependant, dans cette configuration que le couplage optique entre le dispositif de couplage optique 1 et la fibre optique 7 offre une efficacité limitée.

Afin d'injecter une quantité optimale du rayonnement lumineux dans la fibre optique, il est souhaitable que ledit rayonnement lumineux émis par le réseau de couplage présente un profil gaussien.

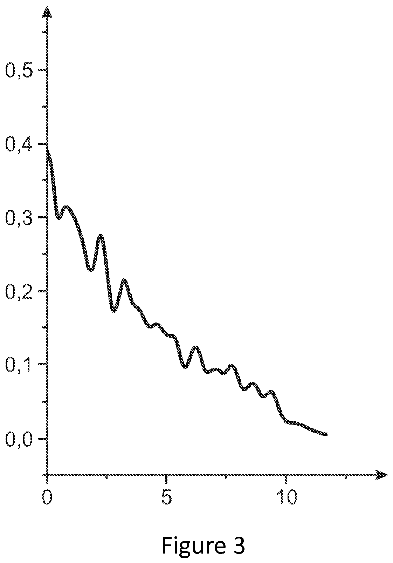

Or, tel qu'illustré à la figure 3, une décroissance exponentielle, selon la direction XX', de l'intensité lumineuse (représentée sur l'axe vertical en fonction d'une position sur le réseau selon la direction XX' sur l'axe horizontal) émise par le réseau de couplage optique est clairement observée.

Pour pallier ce problème, les documents [1], [2], [3] proposent d'adapter la structure du réseau de couplage optique, notamment par apodisation dudit réseau, de manière à améliorer le couplage. Les gains en termes d'efficacité restent cependant réduits, et la décroissance exponentielle, selon la direction XX', de l'intensité lumineuse émise par le réseau de couplage optique est toujours observée.

Les documents [6], [7], et [8] cités à la fin de la description décrivent chacun un dispositif de couplage optique.

Le document [9] divulgue une tête de lecture optique d'un disque optique.

Un but de la présente invention est alors de proposer un dispositif de couplage optique présentant une efficacité de couplage optique supérieure à celle des dispositifs de couplage optique connus de l'état de la technique.

Un autre but de la présente invention est de proposer un dispositif de couplage optique pour lequel l'enveloppe du rayonnement lumineux émis par le réseau de couplage optique est essentiellement Gaussienne.

## EXPOSÉ DE L'INVENTION

Les buts de l'invention sont au moins en partie atteints par un dispositif de couplage optique, destiné à coupler un guide d'onde avec une fibre optique, le dispositif de couplage optique comprenant en séquence, selon une direction XX', une lentille de focalisation et un réseau de couplage optique, le dispositif de couplage optique étant symétrique par rapport à un plan H, et dans lequel :

- la lentille de focalisation est formée dans une couche cœur présentant un indice de réfraction nc et une épaisseur Ec, et comprenant deux faces, dites, respectivement, face avant et face arrière, essentiellement parallèles, et en contact avec des milieux d'indice de réfraction inférieurs à l'indice de réfraction nc, le plan H est perpendiculaire à la couche cœur, et son intersection avec la couche cœur (20) comprend la direction XX', la lentille de focalisation est destinée à focaliser un rayonnement lumineux, se propageant selon la direction XX', en un point de focalisation F,
- le réseau de couplage optique comprend une pluralité de tranchées, formées sur la face avant, parallèles entre elles, et de forme convexe selon la direction XX', le réseau de couplage optique comprend, en séquence, selon la direction XX', un premier sous réseau et un second sous réseau, contiguës, délimités, respectivement, par un premier contour et un second contour, lesdits premier et second contour s'étendent, selon la direction XX', respectivement, de manière divergente et de manière convergente, le point de focalisation F est compris dans le réseau de couplage optique.

Selon un mode de mise en œuvre, la lentille de focalisation comprend en séquence, selon la direction XX', un premier dioptre D1 et un second dioptre D2, délimitant un évidement dans la couche cœur d'une profondeur Ee inférieure ou égale à l'épaisseur Ec.

Selon un mode de mise en œuvre, la lentille de focalisation est une lentille concave-concave.

Selon un mode de mise en œuvre, le premier dioptre D1 et le second dioptre D2 présentent chacun, selon un plan parallèle à la face avant, une section en arc de cercle.

Selon un mode de mise en œuvre, le premier contour comprend en séquence, selon la direction XX', un premier contour central disposé entre deux premiers contours latéraux, les deux premiers contours latéraux étant disposés symétriquement par rapport au plan H, et dans le prolongement du contour central, les deux premiers contours latéraux étant plans.

Selon un mode de mise en œuvre, le premier contour central présente une section conique selon un plan parallèle à face avant, avantageusement, la section conique est un demi-cercle.

Selon un mode de mise en œuvre, la section conique est un demi-cercle.

Selon un mode de mise en œuvre, la section conique comprend un foyer en coïncidence avec le point de focalisation F.

Selon un mode de mise en œuvre, le second contour comprend deux parties planes disposées dans le prolongement du premier contour, et symétriquement par rapport au plan H.

Selon un mode de mise en œuvre, le second contour comprend un second contour plan, perpendiculaire à la direction XX', et reliant les deux parties planes.

Selon un mode de mise en œuvre, les tranchées de la pluralité de tranchées sont disposées périodiquement selon une période P, la période P étant définie par relation :

$$\lambda = P(neff-nc*\sin(\theta))$$

où neff est un indice de réfraction effectif d'un mode optique guidé de la lentille de focalisation vers le réseau de couplage optique, et $\theta$ un angle, selon une direction du plan H, d'émission à partir du réseau de couplage.

## BRÈVE DESCRIPTION DES DESSINS

D'autres caractéristiques et avantages apparaîtront dans la description qui va suivre du dispositif de couplage optique selon l'invention, donné à titre d'exemples non limitatifs, en référence aux dessins annexés dans lesquels :

-   la figure 1 est une représentation schématique, selon un plan de coupe transverse, d'un dispositif de couplage optique connu de l'état de la technique,
-   la figure 2 est une représentation schématique, selon un plan de coupe transverse, d'un dispositif de couplage optique couplé à une fibre optique, et connu de l'état de la technique,
-   la figure 3 est un graphique représentant l'intensité (selon l'axe verticale) du rayonnement lumineux émis par un réseau de couplage optique connu de l'état de la technique, en fonction d'une position sur ledit réseau selon l'axe XX' (selon l'axe horizontal),
-   les figures 4a et 4b sont des représentations schématiques du dispositif de couplage optique selon un mode de réalisation de l'invention, respectivement, en vue de dessus (par la face avant), et en coupe transverse (selon le plan de coupe YY'),
-   la figure 5 est représentation schématique en vue de dessus du dispositif de couplage optique selon l'invention, détaillant les éléments de la lentille de focalisation et du contour du réseau de couplage optique selon l'invention,
-   la figure 6 est une représentation schématique illustrent la divergence et la convergence, respectivement, du premier contour et du second contour.

## EXPOSÉ DÉTAILLÉ DE MODES DE RÉALISATION PARTICULIERS

L'invention décrite de manière détaillée ci-dessous met en œuvre un dispositif de couplage optique permettant un couplage à une fibre optique efficace. Plus précisément, la présente invention met en œuvre un dispositif de couplage optique pourvu d'un réseau de couplage optique comprenant un premier sous réseau et un second sous réseau, dont les contours (un premier contour et un second contour) respectifs s'étendent, respectivement, de manière divergente et de manière convergente selon la direction d'élongation XX' du réseau de couplage optique. Le dispositif selon l'invention comprend en outre une lentille de focalisation apte à focaliser un rayonnement lumineux, se propageant selon la direction XX', en un point de focalisation F compris dans le premier sous réseau. Le premier sous réseau, avec son premier contour divergent, permet d'obtenir un rayonnement lumineux présentant un profil Gaussien selon les directions longitudinale (selon la direction XX') et transversale (perpendiculairement à la direction XX').

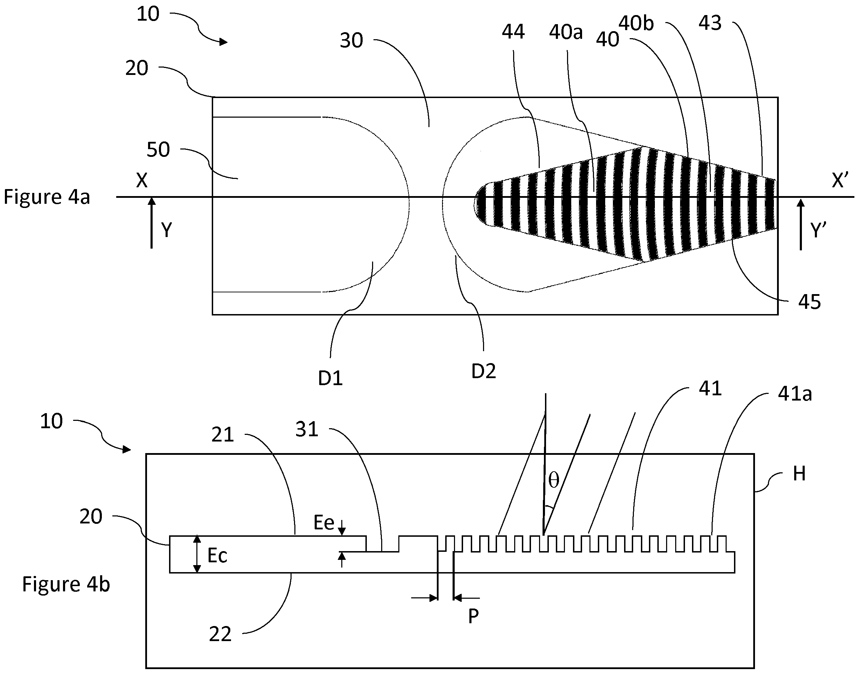

Aux figures 4a et 4b, on peut voir une représentation schématique du dispositif de couplage optique 10 selon l'invention.

Le dispositif de couplage optique 10 comprend en séquence, selon une direction XX', une lentille de focalisation 30 et un réseau de couplage optique 40.

Le dispositif de couplage optique 10 est formée sur ou dans une couche cœur 20.

Le dispositif de couplage optique 10 est symétrique par rapport à un plan H perpendiculaire à la couche cœur 20, et dont l'intersection avec ladite couche cœur 20 comprend la direction XX'.

Il est entendu que tous les éléments, ou sous éléments, du dispositif de couplage optique 10, cités dans la description, sont symétriques par rapport au plan H.

Le dispositif de couplage optique 10 est par exemple destiné à coupler un guide d'onde avec une fibre optique. Plus particulièrement, le dispositif de couplage optique 10 est adapté pour transmettre un rayonnement lumineux d'une longueur d'onde $\lambda$, du guide d'onde vers la fibre optique. Dans la pratique, la fibre optique est disposée au-dessus du réseau de couplage optique, soit perpendiculairement (autrement en incidence normale), soit de manière oblique dans le plan H. Nous notons l'angle d'incidence $\theta$ (en degrés « ° ») de la fibre optique par rapport à la normale du réseau de couplage optique 10.

Plus particulièrement, le réseau de couplage optique 40 émet le rayonnement lumineux selon une direction préférentielle. Dans la description, nous considérons que la fibre optique est couplée au dispositif de couplage optique 10 selon cet angle d'émission et assimilons ledit angle d'émission à l'angle $\theta$. Nous notons à cet égard que l'angle d'émission correspond à une direction comprise dans le plan H.

La couche cœur 20 a une épaisseur Ec, et est faite d'un matériau d'indice de réfraction nc.

Il est entendu, sans qu'il soit nécessaire de le préciser, que la couche cœur 20 est une couche de confinement d'un rayonnement lumineux quasi-monochromatique de longueur d'onde $\lambda$ susceptible d'être guidé par le dispositif de couplage optique 10.

Plus particulièrement, la couche cœur 20 comprend deux faces, dites respectivement face 21 et face arrière 22, essentiellement parallèles, et en contact avec des milieux d'indice de réfraction inférieur à l'indice de réfraction nc.

Par rayonnement lumineux quasi monochromatique, nous entendons un rayonnement lumineux comprenant une bande spectrale d'étendue $\Delta\lambda < \lambda/10$ centrée sur une longueur d'onde centrale $\lambda$.

De manière avantageuse, le rayonnement lumineux peut être monochromatique de longueur d'onde $\lambda$ (dans ce cas de figure, nous assimilons la longueur d'onde centrale $\lambda$ à la longueur d'onde $\lambda$ du rayonnement monochromatique).

De manière avantageuse, la longueur d'onde centrale $\lambda$ peut être comprise entre 1260 nm et 1360 nm, par exemple 1310 nm, ou entre 1530 nm et 1580 nm, par exemple 1550nm.

La couche cœur 20 peut comprendre au moins un des matériaux choisi parmi : silicium, nitrure de silicium (SiNx), dioxide de titane, germanium,... .

La couche cœur 20 peut par exemple être une couche de semi-conducteur d'un substrat de semi-conducteur sur isolant, par exemple du silicium sur isolant.

La lentille de focalisation 30 est formée dans la couche cœur 20.

La lentille de focalisation 30 est destinée à focaliser un rayonnement lumineux de longueur d'onde $\lambda$, se propageant selon la direction XX', en un point de focalisation F au niveau du réseau de couplage optique 40. Ainsi, le rayonnement lumineux se propage de la lentille de focalisation 30 vers le point de focalisation F selon un front d'onde incurvé. Plus précisément, ledit front d'onde présente une première courbure convexe selon la direction XX'.

La première courbure du front d'onde dépend des paramètres géométriques de la lentille et peut ainsi être ajustée par des techniques connues de l'homme du métier.

Par convexe selon la direction XX', nous entendons une convexité orientée selon l'axe XX'. Plus particulièrement, un élément convexe selon la direction XX', présente une courbure dans le plan de la face avant 21, ladite courbure présentant une convexité orientée selon l'axe XX'.

Par concave selon la direction XX', nous entendons une concavité orientée selon l'axe XX'. Plus particulièrement, un élément concave selon la direction XX', présente une courbure dans le plan de la face avant 21, ladite courbure présentant une concavité orientée selon l'axe XX'.

A la lecture de ce qui précède, il est évident que la lentille de focalisation 30 est une lentille convergente.

A cet égard, la lentille de focalisation 30 peut comprendre en séquence, selon la direction XX', un premier dioptre D1 et un second dioptre D2, délimitant un évidement 31 dans la couche cœur 20 d'une profondeur Ee inférieure à l'épaisseur Ec. La profondeur Ee est par exemple inférieure ou égale à la moitié de l'épaisseur Ec.

Par évidement, nous entendons un retrait de matière dans la couche cœur 20, par exemple à partir de la face avant 21.

L'évidement peut, par exemple, être obtenu par gravure d'une couche de silicium faisant suite à une étape de photolithographie. Ces techniques, connues de l'homme du métier, ne sont pas décrites en détails dans la présente invention.

Le premier dioptre D1 et le second dioptre D2 peuvent avoir chacun leur surface perpendiculaire à la couche cœur 20.

Le premier dioptre D1 et le second dioptre D2 peuvent être, selon la direction XX', respectivement, de forme concave et de forme convexe.

La lentille de focalisation 30 est alors une lentille concave-concave.

De manière avantageuse, le premier dioptre D1 et le second dioptre D2 peuvent présenter chacun, selon un plan parallèle à la face avant 21, une section en arc de cercle (par exemple un demi-cercle), de rayons respectifs R1 et R2.

L'homme du métier trouvera dans le document [5] cité à la fin de la description les informations nécessaires au dimensionnement de la lentille de focalisation comprenant un premier D1 et un second D2 dioptre.

De manière particulièrement avantageuse, le dioptre D1 termine un guide d'onde 50 formé dans la couche cœur 20, s'étendant selon la direction XX'.

Le guide d'onde 50 est adapté pour guider un mode optique associé au rayonnement lumineux d'indice de réfraction effectif neff.

Ainsi tout rayonnement lumineux guidé par le guide d'onde 50, est focalisé par la lentille de focalisation 30 au niveau du point focal F disposé au niveau du réseau de couplage optique 40.

Le réseau de couplage optique 40 comprend une pluralité de tranchées 41, formées dans la couche cœur 20 à partir de la face avant 21, par exemple de profondeur Ee.

Par réseau de couplage optique 40, nous entendons un réseau de diffraction comprenant des tranchées disposées périodiquement selon une période P.

Les tranchées 41a de la pluralité de tranchées 41 sont parallèles entre elles. Par ailleurs, les tranchées 41a sont de forme convexe selon la direction XX'. Les tranchées 41a sont donc incurvées, et présentent une seconde courbure.

La période P peut vérifier la relation suivante :

$$m\lambda = P(neff - nc*\sin(\theta))$$

(m étant un nombre entier positif, par exemple m=1)

De manière avantageuse, la seconde courbure des tranchées 41a est voisine de la première courbure. Par voisine, nous entendons qu'un écart ne dépassant pas les 15% peut être admis. Les première et seconde courbures sont, encore plus avantageusement identiques. Ainsi, le front d'onde du rayonnement lumineux, focalisé par la lentille de focalisation 30, épouse la seconde courbure des tranchées 41a du réseau de couplage optique 40.

Le réseau de couplage optique 40 est également délimité par un contour 43. Par contour, nous entendons une surface latérale, exposée, et essentiellement perpendiculaire à la face avant 21. Il est entendu, sans qu'il soit nécessaire de le préciser, que le contour 43 est une surface fermée.

Le réseau de couplage optique 40 comprend un premier sous réseau 40a, et un second sous réseau 40b. Le premier sous réseau 40a et le second sous réseau 40b sont contigües, et disposés en séquence selon la direction XX'.

Le contour 43 comprend, en séquence, selon la direction XX', un premier contour 44 et un second contour 45 s'étendant, toujours selon la direction XX', de manière divergente et de manière convergente.

Le premier contour 44 délimite le premier sous réseau 40a.

Le second contour 45 délimite le second sous réseau 40b.

Il est entendu que les premier 44 et second 45 contours ne sont pas fermés, et que le contour commun aux premier 40a et second 40b sous réseau n'est délimité par aucun des premier 44 et second 45 contours. Autrement dit, le premier contour 44 délimite le premier sous réseau 40a sur son pourtour non commun avec celui du second sous réseau 45, et le second contour 45 délimite le second sous réseau 40b sur son pourtour non commun avec celui du premier sous réseau 44.

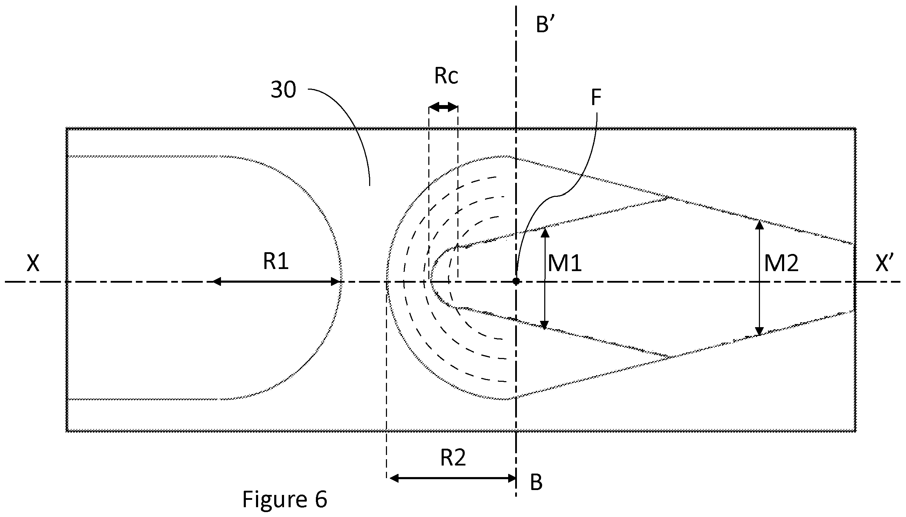

Par s'étendre de manière divergente, nous entendons une augmentation progressive, selon la direction XX', de la distance M1 entre les parois du premier contour, la distance M1 étant mesurée selon une direction BB' perpendiculaire au plan H (figure 6).

L'augmentation progressive peut être, par exemple, au moins en partie linéaire.

Par s'étendre de manière convergente, nous entendons une diminution progressive, selon la direction XX', de la distance M2 entre les parois du second contour, la distance M2 étant mesurée selon une direction BB' perpendiculaire au plan H (figure 6).

De manière particulièrement avantageuse, le point de focalisation F est compris au niveau du premier sous réseau 40a, par exemple proche de son centre.

Le point de focalisation F peut également être compris au niveau du second sous réseau 40b.

Ainsi, le profil divergent du premier contour 44 permet d'obtenir une enveloppe Gaussienne du rayonnement lumineux émis par le réseau de couplage optique 40, rendant le couplage avec une fibre optique plus efficace.

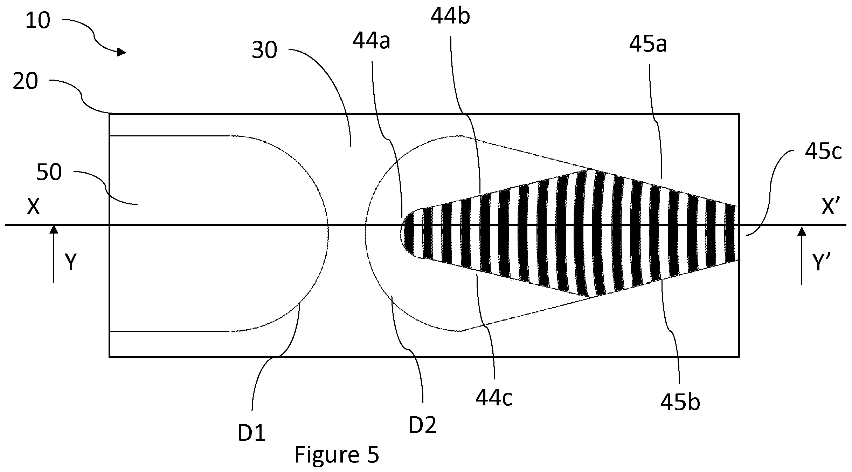

De manière avantageuse, le premier contour 44 comprend en séquence, selon la direction XX', un premier contour central 44a et deux premiers contours latéraux 44b et 44c (figure 5). Les deux premiers contours latéraux 44b et 44c sont disposés symétriquement par rapport au plan H, et dans le prolongement du premier contour central 44a. En outre les deux premiers contours latéraux 44b et 44c sont plans.

Le premier contour central 44a peut présenter une section conique selon un plan parallèle à la face avant.

De manière avantageuse, la section conique peut être un demi-cercle.

Le second contour 45 peut comprendre deux parties planes 45a et 45b (figure 5) disposées dans le prolongement du premier contour 44, et symétriquement par rapport au plan H (par partie plane, nous entendons une surface plane perpendiculaire à la face avant 21).

Le second contour 45 peut comprendre un second contour plan 45c, perpendiculaire à la direction XX', et reliant les deux parties planes 45a et 45b.

Le réseau de couplage optique 40 peut également être apodisé.

Par exemple, les quatre premières tranchées 41a (selon la direction XX') du réseau de couplage 40 peuvent présenter une largeur, respectivement, de 100nm, 120nm, 160nm et 180 nm. Les tranchées suivantes peuvent présenter une largeur de 247,5 nm.

Afin d'en estimer les performances, le comportement du dispositif de couplage optique 10 selon l'invention a été simulé selon un modèle numérique dit FDTD (« Finite Différence Time Domain Method »).

Dans cet exemple, la lentille de focalisation 30 comprend les premier D1 et second D2 dioptres, présentant chacun une section, selon un plan parallèle à la couche cœur 20, en demi-cercle de rayon R = 15 $\mu$m. Le dispositif comprend en outre un guide d'onde 50 s'étendant selon la direction XX' et se terminant par le premier dioptre D1.

Toujours dans cet exemple, le premier contour comprend le premier contour central 44a et les deux premiers contours latéraux 44b et 44c. Le premier contour central 44a présente selon le plan parallèle à la face avant 21, une section en demi-cercle, de rayon Rc = 8,2 $\mu$m.

Les deux premiers contours latéraux 44b et 44c s'étendent sur une longueur de 2.2$\mu$m dans le plan de la couche cœur 20, par rapport à la direction XX'.

Les deux contours latéraux 44b et 44c présentent une déflection, respectivement, de 6.2$\mu$m par rapport à la direction BB'.

La longueur d'onde du rayonnement lumineux considéré est de 1310 nm, la périodicité du réseau de couplage optique est P = 495 nm.

L'angle d'émission $\theta$, dans cette configuration, est de 6° (nous notons que pour un réseau de couplage optique connu de l'état de la technique, l'angle d'émission est généralement de 8°).

En l'absence de miroir sous le réseau de couplage optique 10, un découplage supérieur à 50% est observé.

La Demanderesse a ainsi observé selon la direction longitudinale (selon l'axe XX') du dispositif de couplage optique 10 une émission d'un rayonnement lumineux présentant un profil essentiellement Gaussien.

Le rayonnement émis par le réseau de couplage optique 10 est ainsi adapté pour être efficacement injecté dans une fibre optique de section circulaire.

L'efficacité de couplage optique avec le dispositif de couplage optique 10 selon invention est ainsi optimisée dès lors que ledit dispositif est couplé à une fibre optique (de section circulaire).

## RÉFÉRENCES

[1] D. Taillaert et al., "Compact efficient broadband grating coupler for silicon-on-insulator waveguides", Opt. Lett. 29(23), 2749 (2004),

[2] D. Vermeulen et al., "High-efficiency fiber-to-chip grating coupler realized using an advanced CMOS-compatible Silicon-On-Insulator platform", Opt. Lett., 18(17), 18278 (2010),

[3] Chao Li et al., "CMOS-compatible high efficiency double-etched apodized waveguide grating coupler", Opt. Express, 21(7), 7868 (2013),

[4] Katsunari Okamoto, "Fundamentals of optical waveguides", ISBN: 978-0-12-525096-2,

[5] K. Van Acoleyen et al., « Compact lens-assisted focusing tapers fabricated on silicon-on-insulator », IV Photonics (GFP), 2001, 8th IEEE, pp. 7-9 (2011),

[6] US2009/0087141,

[7] US 7184627,

[8] Hirata et al., "Démonstration of a Wave Guide Lens Monolithically Integrated with a Laser Diode by Composition Disordering of a Quantum Well", IEEE Photonics Technology Letters, 5(6), 1041-1135, (1993),

[9] EP2977801.

## Revendications

1. Dispositif de couplage optique (10) destiné à coupler un guide d'onde avec une fibre optique, le dispositif de couplage optique (10) comprenant en séquence, selon une direction XX', une lentille de focalisation (30) et un réseau de couplage optique (40), le dispositif de couplage optique (10) étant symétrique par rapport à un plan H, et dans lequel :

   - la lentille de focalisation (30) est formée dans une couche cœur (20) présentant un indice de réfraction nc et une épaisseur Ec, et comprenant deux faces, dites, respectivement, face avant (21) et face arrière (22), essentiellement parallèles, et en contact avec des milieux d'indice de réfraction inférieurs à l'indice de réfraction nc, le plan H est perpendiculaire à la couche cœur (20), et son intersection avec la couche cœur (20) comprend la direction XX', la lentille de focalisation (30) est destinée à focaliser un rayonnement lumineux, se propageant selon la direction XX', en un point de focalisation F,
   - le réseau de couplage optique (40) comprend une pluralité de tranchées (41), formées sur la face avant (21), et parallèles entre elles,

   le dispositif étant **caractérisé en ce que** les tranchées (41a) sont de forme convexe selon la direction XX', le réseau de couplage optique (40) comprend, en séquence, selon la direction XX', un premier sous réseau (40a) et un second sous réseau (40b), contiguës, délimités, respectivement, par un premier contour (44) et un second contour (45), lesdits premier (44) et second (45) contour s'étendent, selon la direction XX', respectivement, de manière divergente et de manière convergente, le point de focalisation F est compris dans le réseau de couplage optique (40).

2. Dispositif de couplage optique selon la revendication 1, dans lequel la lentille de focalisation (30) comprend en séquence, selon la direction XX', un premier dioptre D1 et un second dioptre D2, délimitant un évidement (31) dans la couche cœur (20) d'une profondeur Ee inférieure ou égale à l'épaisseur Ec.

3. Dispositif de couplage optique selon la revendication 2, dans lequel la lentille de focalisation (30) est une lentille concave-concave.

4. Dispositif de couplage optique selon la revendication 2 ou 3, dans lequel le premier dioptre D1 et le second dioptre D2 présentent chacun, selon un plan parallèle à la face avant (21), une section en arc de cercle.

5. Dispositif de couplage optique selon l'une des revendications 1 à 4, dans lequel le premier contour (44) comprend en séquence, selon la direction XX', un premier contour central (44a) disposé entre deux premiers contours latéraux (44b, 44c), les deux premiers contours latéraux (44b, 44c) étant disposés symétriquement par rapport au plan H, et dans le prolongement du contour central (44a), les deux premiers contours latéraux (44b, 44c) étant plans.

6. Dispositif de couplage optique selon la revendication 5, dans lequel le premier contour central (44a) présente une section conique selon un plan parallèle à la face avant (21).

7. Dispositif de couplage optique selon la revendication 6, dans lequel la section conique est un demi-cercle.

8. Dispositif de couplage optique selon l'une des revendications 1 à 7, dans lequel le second contour (45) comprend deux parties planes (45a, 45b) disposées dans le prolongement du premier contour (44), et symétriquement par rapport au plan H.

9. Dispositif de couplage optique selon la revendication 8, dans lequel le second contour (45) comprend un second contour plan (45c), perpendiculaire à la direction XX', et reliant les deux parties planes (45b, 45c).

10. Dispositif de couplage optique selon l'une des revendications 1 à 9, dans lequel les tranchées (41a) de la pluralité de tranchées (41) sont disposées périodiquement selon une période P, la période P étant définie par relation :

$$\lambda = P(neff - nc * \sin(\theta))$$

où neff est un indice de réfraction effectif d'un mode optique guidé de la lentille de focalisation (30) vers le réseau de couplage optique (40), et θ un angle, selon une direction du plan H, d'émission à partir du réseau de couplage (40).

**Patentansprüche**

1. Optische Kopplungsvorrichtung (10) zum Koppeln eines Wellenleiters mit einer optischen Faser, wobei die optische Kopplungsvorrichtung (10) in einer Richtung XX' nacheinander eine Fokussierungslinse (30) und ein optisches Kopplungsgitter (40) umfasst, wobei die optische Kopplungsvorrichtung (10) symmetrisch zu einer Ebene H ist, und wobei

    - die Fokussierungslinse (30) aus einer Kernschicht (20) gebildet ist, die einen Brechungsindex nc und eine Dicke Ec hat und zwei Flächen aufweist, Vorderseite (21) bzw. Rückseite (22) genannt, die im Wesentlichen parallel zueinander verlaufen und in Kontakt mit Medien stehen, deren Brechungsindex niedriger als der Brechungsindex nc ist, wobei die Ebene H senkrecht zur Kernschicht (20) verläuft und ihr Schnittpunkt mit der Kernschicht (20) die Richtung XX' umfasst, wobei die Fokussierungslinse (30) dazu bestimmt ist, eine Lichtstrahlung, die sich in der Richtung XX' ausbreitet, in einem Fokussierungspunkt F zu fokussieren,
    - das optische Kopplungsgitter (40) eine Vielzahl von Gräben (41) aufweist, die auf der Vorderseite (21) ausgebildet sind und parallel zueinander verlaufen,

wobei die Vorrichtung **dadurch gekennzeichnet ist, dass**
die Gräben (41a) in Richtung XX' eine konvexe Form haben, das optische Kopplungsgitter (40) in Richtung XX' nacheinander ein erstes Teilgitter (40a) und ein zweites Teilgitter (40b) umfasst, die aneinander angrenzen und jeweils durch eine erste Kontur (44) und eine zweite Kontur (45) begrenzt sind, wobei sich die erste (44) und die zweite Kontur (45) in Richtung XX' divergierend bzw. konvergierend erstrecken, wobei der Fokussierungspunkt F in dem optischen Kopplungsgitter (40) enthalten ist.

2. Optische Kopplungsvorrichtung nach Anspruch 1, wobei die Fokussierungslinse (30) in Richtung XX' nacheinander eins erstes Diopter D1 und ein zweites Diopter D2 enthält, die eine Ausnehmung (31) in der Kernschicht (20) mit einer Tiefe Ee begrenzen, die kleiner oder gleich der Dicke Ec ist.

3. Optische Kopplungsvorrichtung nach Anspruch 2, wobei die Fokussierungslinse (30) eine Konkav-Konkav-Linse ist.

4. Optische Kopplungsvorrichtung nach Anspruch 2 oder 3, wobei das erste Diopter D1 und das zweite Diopter D2 jeweils einen bogenförmigen Querschnitt in einer Ebene parallel zur Vorderseite (21) aufweisen.

5. Optische Kopplungsvorrichtung nach einem der Ansprüche 1 bis 4, wobei die erste Kontur (44) in Richtung XX' nacheinander eine erste zentrale Kontur (44a), die zwischen zwei ersten seitlichen Konturen (44b, 44c) angeordnet ist, aufweist, wobei die beiden ersten seitlichen Konturen (44b, 44c) symmetrisch in Bezug auf die Ebene H und in Verlängerung der zentralen Kontur (44a) angeordnet sind, wobei die beiden ersten seitlichen Konturen (44b, 44c) eben sind.

6. Optische Kopplungsvorrichtung nach Anspruch 5, wobei die erste zentrale Kontur (44a) einen konischen Abschnitt in einer Ebene parallel zur Vorderseite (21) aufweist.

7. Optische Kopplungsvorrichtung nach Anspruch 6, wobei der konische Abschnitt ein Halbkreis ist.

8. Optische Kopplungsvorrichtung nach einem der Ansprüche 1 bis 7, wobei die zweite Kontur (45) zwei ebene Teile (45a, 45b) aufweist, die in Verlängerung der ersten Kontur (44) und symmetrisch in Bezug auf die Ebene H angeordnet sind.

9. Optische Kopplungsvorrichtung nach Anspruch 8, wobei die zweite Kontur (45) eine zweite ebene Kontur (45c) aufweist, die senkrecht zur Richtung XX' verläuft und die beiden ebenen Teile (45b, 45c) verbindet.

10. Optische Kopplungsvorrichtung nach einem der Ansprüche 1 bis 9, wobei die Gräben (41) aus der Vielzahl von Gräben (41) periodisch mit einer Periode P angeordnet sind, wobei die Periode P definiert ist durch die Beziehung:

$$\lambda = P(neff - nc \cdot \sin(\theta))$$

wobei neff ein effektiver Brechungsindex einer geführten optischen Mode der Fokussierungslinse (30) zum optischen Kopplungsgitter (40) hin ist und θ ein Emissionswinkel aus dem Kopplungsgitter (40) mit einer Richtung der Ebene H ist.

**Claims**

1. An optical coupling device (10) for coupling a waveguide with an optical fibre, the optical coupling device (10) comprising in sequence, along a direction XX', a focusing lens (30) and an optical grating coupler (40), the optical coupling device (10) being symmetrical with respect to a plane H, and wherein:

   - the focusing lens (30) is formed in a core layer (20) having a refractive index nc and a thickness Ec, and comprising two faces, respectively called a front face (21) and a rear face (22), which are essentially parallel, and in contact with media with refractive indices lower than the refractive index nc, the plane H is perpendicular to the core layer (20), and its intersection with the core layer (20) comprises the direction XX', the focusing lens (30) is for focusing a light radiation, propagating along the direction XX', at a focusing point F,
   - the optical grating coupler (40) comprises a plurality of trenches (41), formed on the front face (21), parallel to each other,

   the device being **characterized in that**, the trenches (41) are with a convex shape along the direction XX', the optical grating coupler (40) comprises, in sequence, along the direction XX', a first sub-grating (40a) and a second sub-grating (40b), which are contiguous, delimited, respectively, by a first contour (44) and a second contour (45), said first (44) and second (45) contours extend, along the direction XX', respectively, in a divergent way and in a convergent way, the focusing point F is included in the optical grating coupler (40).

2. The optical coupling device according to claim 1, wherein the focusing lens (30) comprises in sequence, along the direction XX', a first dioptre D1 and a second dioptre D2, delimiting a recess (31) in the core layer (20) with a depth Ee lower than or equal to the thickness Ec.

3. The optical coupling device according to claim 2, wherein the focusing lens (30) is a concave-concave lens.

4. The optical coupling device according to claim 2 or 3, wherein the first dioptre D1 and the second dioptre D2 each have, along a plane parallel to the front face (21), an arc-of-circle cross-section.

5. The optical coupling device according to one of claims 1 to 4, wherein the first contour (44) comprises in sequence, along the direction XX', a first central contour (44a) disposed between two first side contours (44b, 44c), the first two side contours (44b, 44c) being symmetrically disposed with respect to the plane H, and as an extension of the central contour (44a), the first two side contours (44b, 44c) being planar.

6. The optical coupling device according to claim 5, wherein the first central contour (44a) has a conical cross-section along a plane parallel to the front face (21).

7. The optical coupling device according to claim 6, wherein the conical cross-section is a semi-circle.

8. The optical coupling device according to one of claims 1 to 7, wherein the second contour (45) comprises two planar parts (45a, 45b) disposed as an extension of the first contour (44), and symmetrically with respect to the plane H.

9. The optical coupling device according to claim 8, wherein the second contour (45) comprises a second planar contour (45c), perpendicular to the direction XX', and connecting both planar parts (45b, 45c).

10. The optical coupling device according to one of claims 1 to 9, wherein the trenches (41a) of the plurality of trenches (41) are disposed periodically according to a period P, the period P being defined by the relationship:

$$\lambda = P(neff-nc*sin(\theta))$$

where neff is an effective refractive index of an optical mode guided from the focusing lens (30) to the optical grating coupler (40), and $\theta$ an angle, along a direction of the plane H, of emission from the grating coupler (40).

EP 3 513 230 B1

1

3    6         5

2                                    4

Et

Ec

X                                          X'

Figure 1

10

Figure 2

EP 3 513 230 B1

Figure 3

Figure 4a

10

20

30

44 40a 40 40b 43

50

X ————————————————————————————————————— X'

Y

Y'

D1

D2

45

EP 3 513 230 B1

13

Figure 4b

10

21 31

20

22

41 41a

θ

H

Ee

Ec

P

Figure 5

Figure 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090087141 A
- US 7184627 B
- EP 2977801 A

**Littérature non-brevet citée dans la description**

- **D. TAILLAERT et al.** Compact efficient broadband grating coupler for silicon-on-insulator waveguides. *Opt. Lett.,* 2004, vol. 29 (23), 2749
- **D. VERMEULEN et al.** High-efficiency fiber-to-chip grating coupler realized using an advanced CMOS-compatible Silicon-On-Insulator platform. *Opt. Lett.,* 2010, vol. 18 (17), 18278
- **CHAO LI et al.** CMOS-compatible high efficiency double-etched apodized waveguide grating coupler. *Opt. Express,* 2013, vol. 21 (7), 7868
- **KATSUNARI OKAMOTO.** *Fundamentals of optical waveguides,* ISBN 978-0-12-525096-2
- Compact lens-assisted focusing tapers fabricated on silicon-on-insulator. **K. VAN ACOLEYEN et al.** IV Photonics (GFP). IEEE, 2001, 7-9
- **HIRATA et al.** Démonstration of a Wave Guide Lens Monolithically Integrated with a Laser Diode by Composition Disordering of a Quantum Well. *IEEE Photonics Technology Letters,* 1993, vol. 5 (6), 1041-1135